# EUROPEAN PATENT SPECIFICATION

(11) **EP 1 770 906 B1**
(45) Date of publication and mention of the grant of the patent: **16.09.2009**
(21) Application number: 05766920.2
(22) Date of filing: 20.07.2005
(51) Int. Cl.: H04L 12/24, H04L 29/06

(54) **A METHOD FOR REALIZING TERMINALS MANAGEMENT IN THE NETWORK DEVICE**
VERFAHREN ZUR ENDGERÄTEVERWALTUNG BEI EINEM NETZWERKGERÄT
PROCEDE POUR METTRE EN OEUVRE UNE GESTION DE TERMINAUX DANS UN DISPOSITIF RESEAU

(30) Priority: 22.07.2004 CN 200410054823
(43) Date of publication of application: 04.04.2007
(73) Proprietor: Huawei Technologies Co., Ltd., Longgang District, Shenzhen Guangdong 518129 (CN)
(72) Inventor: LIU, Chenglong, Shenzhen, Guangdong 518129 (CN)
(74) Representative: Viering, Jentschura & Partner
(86) International application number: PCT/CN2005/001076
(87) International publication number: WO 2006/007789

(56) References cited:
- CN-A- 1 510 865
- CN-A- 1 510 865
- US-A- 5 678 006
- US-A1- 2002 188 708
- US-B1- 6 725 264
- JUN ZHU PAUL WADZINSKE: "SNMP SECURE FORWARDER" IP.COM JOURNAL, IP.COM INC., WEST HENRIETTA, NY, US, 24 June 2002 (2002-06-24), XP013003559 ISSN: 1533-0001
- ADMINISTRATIVE MODEL FOR SNMPV2C: "Administrative Model for Version 2C of the Simple Network Management Protocol (SNMPv2C)" IETF STANDARD-WORKING-DRAFT, INTERNET ENGINEERING TASK FORCE, IETF, CH, no. 1, September 1995 (1995-09), XP015036417 ISSN: 0000-0004

## Description

### Field of the Invention

The present invention relates to network communication, and in particular to a method for realizing terminal management in a network device.

### Background of the Invention

In the popular broadband access application in Chinese telecommunication market, the majority are Digital Subscriber Line (DSL) terminals. At present, it has been a most concerned issue that how the mass of devices is effectively managed and how new services are added. A uniform standard protocol, Simple Network Management Protocol (SNMP), is employed to perform uniform and centralized management on terminals at a DSL central office.

SNMP guarantees the transmission of management information between any two nodes of the communication network, so that network administrators may search for information at any node of the communication network, modify the corresponding configuration information, and find faults, so as to perform fault diagnosis, capacity planning and report generation.

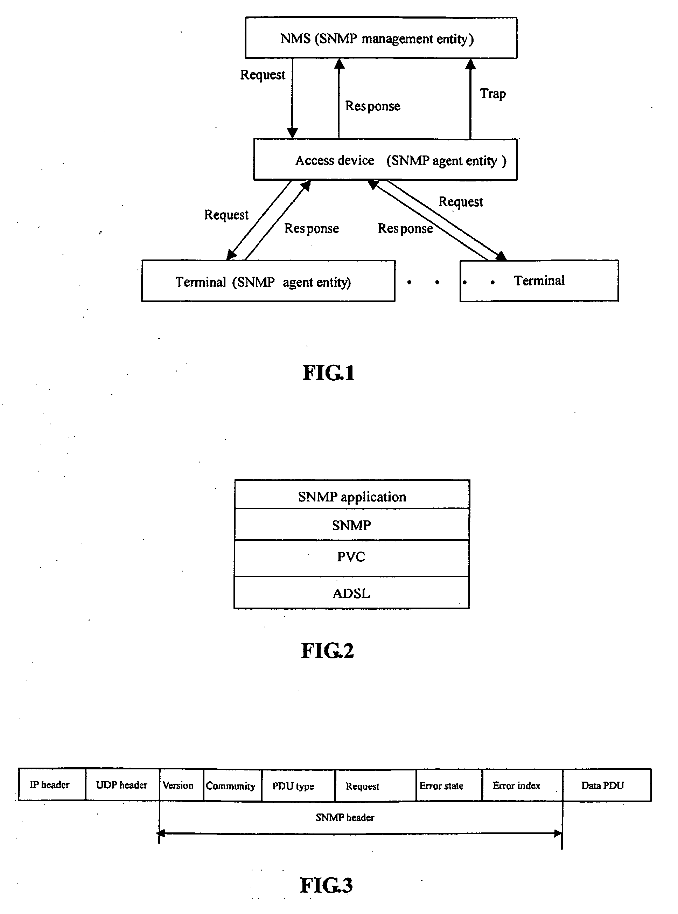

In general, SNMP is used for the communication between a Network Management Station (NMS) and network device Agents. The communication process between the NMS and the network device Agents is shown in FIG.1. In FIG.1, the NMS (i.e., SNMP management entity) sends various Request messages to the network device Agents, receives Response messages and Trap messages from the managed network device Agents, and displays the results.

The Agents' are further classified into Proxy Agent (i.e., the access device in FIG.1, SNMP agent entity) and Proxied Agent (i.e., the terminals in FIG.1, SNMP agent entity). The network device corresponding to the Proxy Agent is referred to as proxy network device, and the network device corresponding to the Proxied Agent is referred to as proxied network device. The NMS communicates with the Proxy Agent under SNMP. The Proxy Agent communicates with the Proxied Agent under a communication protocol between the proxy network device and the proxied network device.

Each Request message under SNMP sent by the NMS is identified at the Proxy Agent at first. If the Request message is addressed to the Proxy Agent, the Proxy Agent itself will process and respond to the Request message. If the Request message is addressed to the Proxied Agent, the Proxy Agent will forward the Request message under SNMP from the NMS to the corresponding Proxied Agent, and the Proxied Agent will process and respond to the Request message.

At present, the message identification function has been realized in a Digital Subscriber Line Access Multiplexer (DSLAM) device as the Proxy Agent, that is, it can be exactly identified in the network device, DSLAM that the Request message is addressed to the Proxy Agent or the Proxied Agent. And, corresponding treatment should be performed on the Request message received, and the result should be returned to the Request message sender, i.e., the NMS. If the SNMP Request message is sent via Internet Protocol (IP) Bearer, or the Proxy Agent corresponds to only one NMS, the destination NMS for receiving the Response message directed to the Request message can be easily determined in the DSLAM device, without any special processing.

However, in practical terminal management of Chinese DSL telecommunication market, SNMP messages between the DSLAM device and the terminals (i.e., between proxy terminals and proxied terminals) are transmitted in a form of non-IP bearer SNMP. For example, at present, SNMP messages from the DSLAM device to the terminals are in a management mode of simplified Permanent Virtual Channel (PVC). The protocol hierarchy of the mode is shown in FIG.2. It can be seen from FIG.2 that the SNMP messages are carried on PVC to send to the terminals. Because there are no contents similar to UDP message headers or IP message headers in the SNMP messages, no routing function is needed to be performed in terminal management with easiness and reliability. However, this results in that: 1) the network device (i.e., DSLAM) cannot identify that a management message from NMS is for managing the network device or the terminal; 2) when one DSLAM device is managed by multiple NMS simultaneously, the DSLAM device cannot identify the destination NMS for receiving Response messages from terminals, that is, when receiving a Response message from a terminal, the DSLAM device cannot determine which NMS the Response message should be addressed to.

In the above case, the DSLAM cannot identify the destination of the Response message from the terminal, so one terminal cannot be managed by multiple NMSs, and the DSLAM device cannot manage terminals without IP addresses.

In addition, US 6,725,264 B1 discloses a method for managing a cluster of network device each having an intra-cluster identifier, and CN 1 510 865 A discloses a method for implementing network management gateway.

### Summary of the Invention

An embodiment of the present invention provides a method for realizing terminal management in a network device, so that one terminal can be managed by multiple NMSs and terminals without IP addresses can also be managed.

The object of the present invention is realized with the following technical solution.

An embodiment of the present invention provides a method for realizing terminal management in a network device including:
receiving a Request message addressed to a terminal from a network management station, the Request message comprising a header of a first protocol and a header of a second protocol; determining network management station identification information in accordance with information contained in the header of the first protocol; establishing a binding relation between the network management station identification information and a field of the header of the second protocol in the network device; carrying the network management station identification information in the Request message; forwarding the message to the terminal; receiving a Response message from the terminal; determining the network management station for receiving the Response message in accordance with the binding relation carried in the Response message; and forwarding the Response message to the network management station.

The message is based on Simple Network Management Protocol (SNMP).

The identification information of the message includes terminal identification information and network management station identification information; wherein, the terminal identification information is an identifier of an interface relation between the terminal and the network device; and

the network management station identification information is IP address of the network management station, or a relation between the IP address of the network management station and a physical interface of the network device.

The method further includes: storing the network management station identification information of the message in the network device.

In the method, the destination network management station for receiving the Response message is determined in accordance with the network management station identification information of the Response message.

The following binding relation is established between the identification information of the message and the SNMP message header field:

the corresponding relation between the identification information and request number information, the corresponding relation between the identification information and information carried in a community field, the corresponding relation between the identification information and error index information, or the corresponding relation between the identification information and other customized information-bearing field.

After receiving the corresponding management message forwarded by the network device, the terminal performs corresponding processing without modifying the SNMP header information, and responds a result to the network device.

After receiving the management message returned by the terminal, the network device parses the response message to obtain the network management station identification information, with which to determine a message responded to the network management station.

In the method, the network management station identification information of the message may be carried in a request number field, a community field or an error index field of the message, and may be also carried in a customized information-bearing field of the message.

When the response message from the terminal, the network device may query about the network management station identification information stored in the network device and determine a message responded to the network management station in accordance with the network management station identification information.

It can be seen from the technical solution according to an embodiment of the present invention that the messages from different network management stations to a DSLAM device are identified by determining identification information of a message. As a result, when a response message is returned from a terminal to the DSLAM device, it is easy to determine in the DSLAM device that to which NMS the response message will be sent, because the network management station identification information is contained in the response message. Therefore, the present invention facilitates the management of terminals by a network device. When messages are exchanged between the network device and the terminals by means of non-IP bearer, one terminal can be managed by multiple network management stations, and terminals without IP addresses can be managed in the DSLAM device. Also, the present invention may be implemented at the premise of SNMP protocol format and SNMP message field definitions, and thus feasibility, simplicity and convenience of the present invention may be achieved.

### Brief Description of the Drawings

FIG.1 is a schematic diagram of a management model between NMS and terminals in DSLAM;

FIG.2 is a schematic diagram of an SNMP message carried in PVC;

FIG.3 is a format of a typical SNMP message;

FIG.4 is a schematic diagram of a management model between NMS and terminals, which can be supported according to an embodiment of the present invention; and

FIG.5 is a flow chart of the method according to an embodiment of the present invention.

### Detailed Description of the Invention

According to an embodiment of the present invention, identification information in a message is obtained by a network device in accordance with information contained in the message addressed to a terminal, and NMS identification information in the message is stored in the network device or sent to the terminal with the message. Accordingly, the terminal performs corresponding processing in accordance with the corresponding management message forwarded by the network device and sends a Response message to the network device. When receiving the Response message returned from the terminal, the network device may determine the destination NMS for receiving the Response message in accordance with the NMS identification information in the message and send the Response message to the determined NMS. Therefore, according to an embodiment of the present invention, terminals may be managed by multiple NMSs and terminals without IP addresses may be managed. That is, according to an embodiment of the present invention, a specific field of header of an SNMP message between the DSLAM and the terminals should be used to identify IP address information of the NMS.

The method according to an embodiment of the present invention will now be described in detail in conjunction with the drawings.

During network management process, the NMS sends messages to its dominative terminals via a network device. An SNMP message sent from the NMS to the network device is in the format as shown in FIG.3, which is usually carried over a UDP (User Datagram Protocol) message and then an IP message. The destination address of the IP message header cannot be the IP address of the terminal, so the network device identifies the terminal under its management from the terminal identification information in other fields of the message header.

As shown in FIG.2, an SNMP message sent from the network device to the terminals has no IP layer, thus NMS source address and a destination address of a managed terminal cannot be identified in a simple way. Therefore, the network device cannot determine the destination NMS to which the message should be responded in accordance with NMS source address and the destination address of the managed terminal.

Based on the format of the above message transmitted between the NMS and the network device, the method according to an embodiment of the present invention is implemented as follows:

(1) When receiving a message from an NMS, a network device such as DSLAM will parse information contained in the message, obtain an SNMP message header field (such as community) for identifying terminal information, and identify the terminal under its management.

It can be seen from the management process that SNMP is carried over a standard IPIUDP message between the NMS and the network device, which can be implemented by using one of the fields of "version, community, PDU type, request number, error state, and error index information" of the SNMP message header data between NMS and the terminal; or a reserved field of IP message header; or one of the fields of "source UDP port number, and destination UDP port number" of the UDP message header; or a customized field of the SNMP message. The SNMP messages transmitted between the network device and the terminal can be implemented by using one of the fields of "version, community, PDU type, request number, error state, and error index information" of the SNMP message header data between NMS and the terminal; or a customized field of the SNMP message. Accordingly, terminal identification information may be also carried in these fields.

The source IP address information of the message from NMS is obtained in accordance with the IP message in the information of message from NMS, and NMS identification information is created. The source IP address information of the message is the IP address information of the NMS. According to an embodiment of the present invention, the NMS identification information of the message is set to IP address of NMS at the network device.

It can be seen from the management process that SNMP is carried over PVC between the terminal and the network device, which can be implemented by using only one of the fields of "version, community, PDU type, request number, error state and error index information" of the SNMP message header data or a customizable field of the SNMP data.

If one of the above fields is determined to carry the identification information, the NMS identification information of the message may be contained in the management message so as to be sent to the terminal, or the NMS identification information may be stored in the network device.

(3) When receiving a Response message returned from the terminal, the DSLAM device determines IP address information of the destination NMS for receiving the Response message in accordance with the NMS identification information of the message. And terminal identification information may be obtained in accordance with the information returned from a physical interface of the network device.

When the identification information of the message is carried in the message so as to be sent to the terminal, the IP address information of the destination NMS for receiving the Response message may be obtained only by parsing the corresponding field in the message in step (3). For example, if the IP address information of NMS is carried in the community field or the error index field of the SNMP message, it can be obtained by parsing the field.

If the identification information of the message is stored in the network device, the information in the message will be obtained usually by the message parsing method, and the IP address of NMS will be determined in the identification information of the message in accordance with the information in step (3). For example, if the identification information of the message recorded in the network device is the corresponding relation between the request number and the source IP address of the message, only the request number of the message is needed to be parsed out, and thus the IP address information of NMS will be determined in accordance with the request number.

(4) After the IP address information of the destination NMS for receiving the Response message is determined, the Response message will be sent to the determined NMS, that is, the DSLAM device may determine the unique destination NMS to which the Response message is forwarded in accordance with the IP address information of the determined NMS. Therefore, the management of terminals may be realized at the network device.

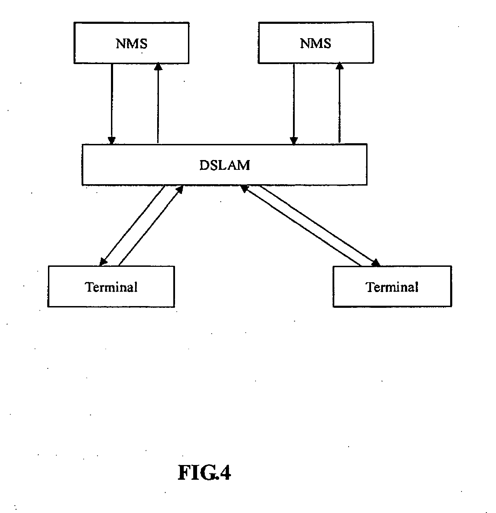

It can be seen from the description of embodiments of the present invention, a terminal may be managed by multiple NMSs. As shown in FIG.4, the destination NMS that the Response message from terminals is addressed to can be easily identified, which facilitates the management of terminals by the NMS via the network device, DSLAM.

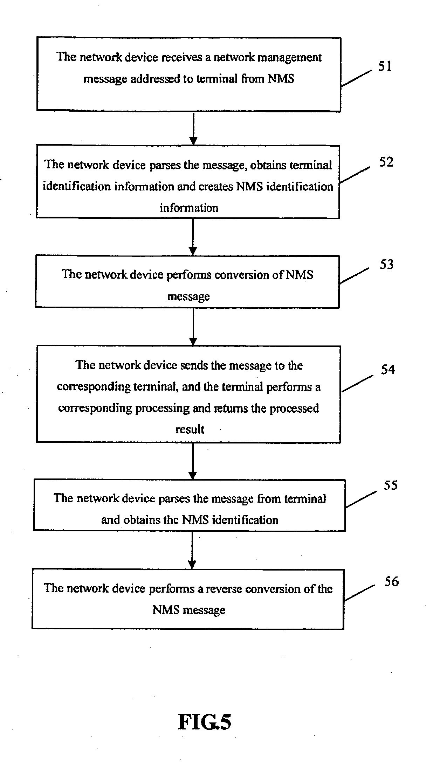

The method according to another embodiment of the invention will now be described as shown in FIG.5.

Step 51: a network device receives a network management message addressed to a terminal from an NMS. The message is used for managing the dominative terminals.

Step 52: the network device parses the message and obtains IP (10.11.12.13) address information of the NMS and an SNMP message header field ("Community" field) of the message. The value of "Community" contains terminal identification information. For example, the value of "Community" is "010203@public", which means that the terminal is connected at frame 01, slot 02, port 03 of the network device, that the access qualification is public, and that the format is customized.

Step 53: the SNMP message over IP from NMS is converted, at the network device, into a PVC-bearing SNMP message addressed to the terminal; i.e., the NMS identifier is carried in the SNMP header and bound to the request number field, "RequestID"; and the value of the request number, "RequestID", is set to 0x0A0B0C0D.

Step 54: the network device sends the message to the corresponding terminal; and the terminal performs the corresponding management and returns the result to the network device.

Step 55: when the network device (e.g., at frame 01, slot 02, port 03) receives a Response message returned from the terminal, it parses the request number information "RequestID" carried in the Response message, and obtains the IP address information of NMS = 0x0A0B0C0D from the request number information, which is returned to the corresponding NMS.

Step 56: the network device converts the Response message in reverse to step 52, i.e., binds the terminal identification information in the SNMP message header, forms a Community field in the format of "010203@public", and sends to the corresponding NMS in accordance with the IP address information of the determined NMS; thus, it can be guaranteed that the NMS receiving the Response message is the NMS which sends the Request messages (i.e., management message) to the terminal.

The above description is preferred embodiments of the present invention, which does not limit the protective scope of the present invention. It is apparent for those skilled in the art to make various variations and equivalents without departing from the disclosure of the present invention. Therefore, the protective scope of the present invention should be determined as defined in the appended claims.

## Claims

1. A method for realizing terminal management in a network device, comprising:
receiving (51) a Request message addressed to a terminal from a network management station, the Request message comprising a header of a first protocol and a header of a second protocol;
determining (52) network management station identification information in accordance with information contained in the header of the first protocol; establishing (53) a binding relation between the network management station identification information and a field of the header of the second protocol in the network device;
carrying (53) the network management station identification information in the Request message;
forwarding (54) the Request message to the terminal;
receiving (54) a Response message from the .terminal;
determining (55, 56) the network management station for receiving the Response message in accordance with the binding relation carried in the Response message; and
forwarding the Response message to the network management station,
wherein the second protocol is Simple Network Management Protocol, SNMP, and the field of the header of the second protocol is a customized information-bearing field, a community field or an error index field of the message.

2. The method for realizing terminal management in a network device according to claim 1, wherein the network management station identification information is an IP address of the network management station, or a relation between the IP address of the network management station and a physical interface of the network device.

## Patentansprüche

1. Verfahren zur Verwirklichung einer Endgeräteverwaltung in einer Netzwerkvorrichtung, aufweisend:
Empfangen (51) einer Anforderungsnachricht, die an ein Endgerät adressiert ist, von einer Netzwerkverwaltungsstation, wobei die Anforderungsnachricht eine Kopfzeile eines ersten Protokolls und eine Kopfzeile eines zweiten Protokolls aufweist;
Bestimmen (52) einer Netzwerkverwaltungstations-Identifikationsinformation gemäß der Informationen, die in der Kopfzeile des ersten Protokolls enthalten sind;
Einrichten (53) einer Verbindungsbeziehung zwischen der Netzwerkverwaltungsstations-Identifikationsinformation und einem Feld der Kopfzeile des zweiten Protokolls in der Netzwerkvorrichtung;
Übertragen (53) der Netzwerkverwaltungsstations-Identifikationsinformation in die Anforderungsnachricht;
Weiterleiten (54) der Anforderungsnachricht an das Endgerät;
Empfangen (54) einer Antwortnachricht des Endgerätes;
Bestimmen (55, 56) der Netzwerkverwaltungsstation zum Empfangen der Antwortnachricht gemäß der Verbindungsbeziehung, die in der Antwortnachricht übertragen wird; und
Weiterleiten der Antwortnachricht an die Netzwerkverwaltungsstation,
wobei das zweite Protokoll ein einfaches Netzwerkverwaltungsprotokoll (SNMP) ist und das Feld der Kopfzeile des zweiten Protokolls ein angepasstes informationstragendes Feld, ein Gemeinschaftsfeld oder ein Fehlerindexfeld der Nachricht ist.

2. Verfahren zur Verwirklichung einer Endgeräteverwaltung in einer Netzwerkvorrichtung gemäß Anspruch 1, wobei die Netzwerkverwaltungsstations-Identifikationsinformation eine IP-Adresse der Netzwerkverwaltungsstation oder eine Beziehung zwischen der IP-Adresse der Netzwerkverwaltungsstation und einer physikalischen Schnittstelle der Netzwerkvorrichtung ist.

## Revendications

1. Procédé pour réaliser une gestion de terminal dans un dispositif réseau, comprenant les étapes consistant à :
recevoir (51) un message de demande adressé à un terminal depuis une station de gestion de réseau, le message de demande comprenant un en-tête d'un premier protocole et un en-tête d'un second protocole ;
déterminer (52) des informations d'identification de station de gestion de réseau conformément à des informations contenues dans l'en-tête du premier protocole ;
établir (53) une relation de liaison entre les informations d'identification de station de gestion de réseau et un champ de l'en-tête du second protocole dans le dispositif réseau ;
transporter (53) les informations d'identification de station de gestion de réseau dans le message de demande ;
transmettre (54) le message de demande au terminal ;
recevoir (54) un message réponse de la part du terminal ;
déterminer (55, 56) la station de gestion de réseau destinée à recevoir le message de réponse conformément à la relation de liaison contenue dans le message de réponse ; et
transmettre le message de réponse à la station de gestion de réseau, où le second protocole est un protocole de gestion de réseau simple, SNMP, et le champ de l'en-tête du second protocole est un champ contenant des informations personnalisées, un champ de communauté ou un champ d'index d'erreur du message.

2. Procédé pour réaliser une gestion de terminal dans un dispositif réseau selon la revendication 1, dans lequel les informations d'identification de station de gestion de réseau sont une adresse IP de la station de gestion de réseau, ou une relation entre l'adresse IP de la station de gestion de réseau et une interface physique du dispositif réseau.
